# EUROPEAN PATENT SPECIFICATION

(11) **EP 1 953 632 B1**
(45) Date of publication and mention of the grant of the patent: **21.02.2018**
(21) Application number: 08000161.3
(22) Date of filing: 07.01.2008
(51) Int. Cl.: G06F 3/048

(54) **A user interface method for a multimedia playing device having a touch screen**
Benutzerschnittstellenverfahren für ein Multimedia-Spielgerät mit Touchscreen
Procédé d'interface utilisateur pour lecteur multimédia doté d'un écran tactile

(30) Priority: 05.02.2007 KR 20070011722
(43) Date of publication of application: 06.08.2008
(73) Proprietor: Samsung Electronics Co., Ltd., Suwon-si, Gyeonggi-do, 443-742 (KR)
(72) Inventor: Jong, In Won, Suwon-si Gyeonggi-do (KR); Kwak, Se Jin, Suwon-si Gyeonggi-do (KR); Baek, Sung Hwan, Suwon-si Gyeonggi-do (KR); Kim, Jin Yong, Suwon-si Gyeonggi-do (KR); Hong, Nho Kyung, Suwon-si Gyeonggi-do (KR); Na, Taek Kyun, Suwon-si Gyeonggi-do (KR)
(74) Representative: HGF Limited

(56) References cited:
- WO-A1-99/34280
- WO-A2-2006/013521

## Description

### BACKGROUND OF THE INVENTION

### 1. Field of the Invention:

The present invention relates to a multimedia playing device. More particularly, the present invention relates to a method of controlling and displaying an attribute of a multimedia file playing in a multimedia playing device.

### 2. Description of the Related Art:

Nowadays, the number of multimedia playing devices having a touch screen for user convenience in data input is increasing. With such a device, a user may play a multimedia file with a simple touch operation. As an example, a multimedia playing device may display a title of a currently playing multimedia file in the touch screen, and thereby the user may identify the title of the multimedia file without inputting operation data. However, when further information about an attribute of the multimedia file (for example, tempo and tone of music) is desired, the user must input the operation data by selecting a menu item to identify the attribute of the multimedia file. While identifying an attribute of a playing multimedia file by selecting a menu item, the user cannot concentrate on the multimedia file is being played.

Additionally, the multimedia file is played according to an attribute (for example, tone, tempo and volume) preset by the user. In the case that the user wants to change the attribute of the multimedia file that is playing, the user must stop playing the multimedia file and enter a setting menu. Therefore, there are difficulties in changing an attribute of a playing multimedia file in the conventional multimedia playing device.

WO 2006/013521 describes a technique for assigning a value to a parameter using a single virtual button displayed on a pressure sensitive touch screen. WO 99/34280 describes a graphical user interface for setting the relative weights of a set of input parameters.

### SUMMARY OF THE INVENTION

An aspect of the present invention is to address at least the above mentioned problems and/or disadvantages and to provide at least the advantages described below. Accordingly, an aspect of the present invention is to provide a method of, and device for, displaying a status of a playing multimedia file in a multimedia playing device.

Another aspect of the present invention is to provide a method of, and device for, controlling a status of a playing multimedia file by using a touch screen.

In accordance with an aspect of the present invention, there is provided a user interface method in a multimedia playing device having a touch screen, the method comprising: displaying, while playing a multimedia file, at least one sound source object in a first area of the touch screen; identifying, if an input event is generated for the sound source object, a type of the input event; changing a form of the displayed sound source object according to the type of the input event; and controlling the playing of the multimedia file according to the changed form, wherein the sound source object illustrates a characteristic of the playing multimedia file, wherein the sound source object is displayed in a wave form, and wherein changing a form of the displayed sound source object and controlling the playing of the multimedia file comprise changing the amplitude of the wave form and changing the volume of the playing multimedia file if the input event is a drag event including a vertical displacement, and changing the frequency of the wave form and changing the play speed of the playing multimedia file if the input event is a drag event including a horizontal displacement.

In accordance with another aspect of the present invention, there is provided a device for playing a multimedia file having a touch screen, the device comprising: a display unit for displaying, while playing the multimedia file, at least one sound source object in a first area of the touch screen; a control unit for identifying, if an input event is generated for the sound source object, a type of the input event, for changing a form of the displayed sound source object according to the type of the input event, and for controlling the playing of the multimedia file according to the changed form, wherein the sound source object illustrates a characteristic of the playing multimedia file, wherein the sound source object is displayed in a wave form, and wherein changing a form of the displayed sound source object and controlling the playing of the multimedia file comprise changing the amplitude of the wave form and changing the volume of the playing multimedia file if the input event is a drag event including a vertical displacement, and changing the frequency of the wave form and changing the play speed of the playing multimedia file if the input event is a drag event including a horizontal displacement.

### BRIEF DESCRIPTION OF THE DRAWINGS

The above and other aspects, features and advantages of certain exemplary embodiments of the present invention will become more apparent from the following detailed description in conjunction with the accompanying drawings, in which:
FIG. 1 is a block diagram illustrating a configuration of a multimedia playing device for providing a user interface according to an exemplary embodiment of the present invention;
FIG. 2 is a flowchart illustrating a user interface method in a multimedia playing device according to another exemplary embodiment of the present invention;
FIGs. 3A and 3B are flowcharts illustrating a detailed process of changing a form of a sound source object corresponding to an input event in the method of FIG. 2;
FIGs. 4A and 4B are display screens illustrating a form change of a sound source object corresponding to a touch event in the process of FIG. 3A;
FIGs. 5A and 5B are display screens illustrating a form change of a sound source object corresponding to a vertical drag event in the process of FIG. 3B;
FIGs. 6A and 6B are further display screens illustrating a form change of a sound source object corresponding to a vertical drag event in the process of FIG. 3B;
FIGs. 7A and 7B are display screens illustrating a form change of a sound source object corresponding to a horizontal drag event in the process of FIG. 3B; and
FIGs. 8A and 8B are further display screens illustrating a form change of a sound source object corresponding to a horizontal drag event in the process of FIG. 3B.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. Also, descriptions of well-known functions and constructions will be omitted for clarity and conciseness.

Several terms used in this specification are defined as follows.

A sound source object is a displayed animation which illustrates a characteristic of a playing sound source such as a media file. A sound source object may comprise information of tone, frequency band output, volume and play speed of a sound source.

An input event is a signal input in a touch screen by a user and may comprise a touch event and/or a drag event.

A multimedia playing device has a module for playing a multimedia file, such as an audio file and a video file. Examples of a multimedia playing device include a Personal Digital Assistant (PDA), hand-held Personal Computer (PC), notebook computer, MP3 player a Portable Multimedia Player (PMP) and the like. The multimedia playing device may also be a mobile communication terminal having a module for playing a multimedia file.

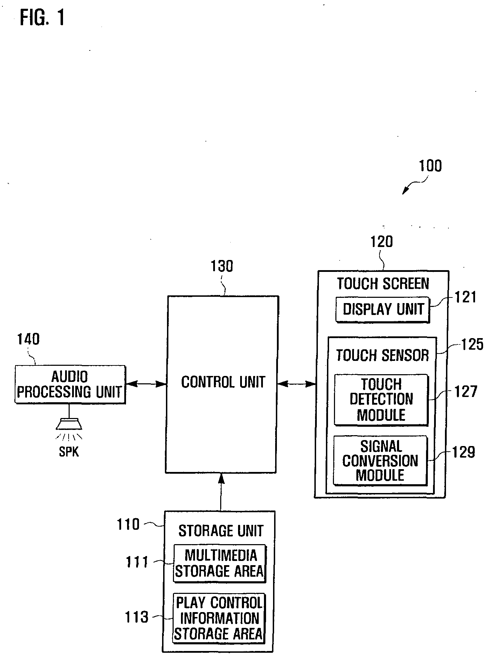

FIG. 1 is a block diagram illustrating a configuration of a multimedia playing device 100 for providing a user interface according to an exemplary embodiment of the present invention.

A storage unit 110 is configured with a program memory and a data memory. The program memory stores operating programs for the multimedia playing device 100 and programs for providing a user interface by using a touch screen 120 according to an exemplary embodiment of the present invention. The data memory stores data generated during execution of the programs, and includes a multimedia storage area 111 for storing at least one multimedia file (audio and video files), and a play control information storage area 113 for storing play control information of a multimedia file, such as volume, tone, tempo and the like. The multimedia storage area 111 may also store a multimedia file downloaded from an external source.

The touch screen 120 includes a display unit 121 and a touch sensor 125. The display unit 121 may be configured with a Liquid Crystal Display (LCD) device, LCD controller, and memory device for storing display data. The display unit 121 displays an operation status of the multimedia playing device 100 and information of a text, image, animation and icon. While playing a multimedia file, the display unit 121 displays a sound source object in the touch screen 120 according to the control of a control unit 130.

The touch sensor 125 installed in the display unit 121 includes a touch detection module 127 and a signal conversion module 129. If an input event is generated, the touch detection module 127 identifies generation of an input event by detecting changes of a corresponding physical property (for example, resistance, capacitance and the like), and outputs the detected physical property to a signal conversion module 129. The input event is a signal input to the touch screen 120 by a user. The signal conversion module 129 converts the changes of the physical property to a digital signal and determines whether the input event is a touch event or a drag event. Additionally, the signal conversion module 129 detects the coordinates at which the input event is generated.

The control unit 130 controls the general operation of the multimedia playing device 100. In particular, the control unit 130 controls the display unit 121 to display at least one sound source object while playing a multimedia file. For example, the control unit 130 controls the display unit 121 to display a sound source object in a wave form. The displayed wave of the sound source object may represent frequency band output, volume, play speed information and the like. For example, the height of a specific point of the wave may represent the frequency band output. That is, if the maximum height of the wave is great, the corresponding frequency band output has a high value, and if the maximum height of the wave is small, the corresponding frequency band output has a low value. Similarly, amplitude of the wave may represent the sound volume. If the difference between the amplitude of the highest point of the wave and the amplitude of the lowest point of the wave is large, the sound volume has a high value, and if the difference between the amplitude of the highest point of the wave and the amplitude of the lowest point of the wave is small, the sound volume has a low value. Also, the frequency of the wave may represent the play speed. If the frequency of the wave is high, the play speed is high, and if the frequency of the wave is low, the play speed is low.

Additionally, the control unit 130 controls the display unit 121 to display each sound source object including first tone or genre information such as classic, rock and dance tones. The control unit 130 may further control the display unit 121 to display each sound source object including second tone information such as vocal and melody tones. The control unit 130 controls the display unit 121 to display each sound source object in an animated wave form, such that individual sound source objects are displayed close to each other but not overlapping each other. The waves indicating the sound source objects are distinguished by at least one of the thickness, color, transparency and the like of a wave line.

If an input event for a sound source object is generated while playing a multimedia file, the control unit 130 controls the touch sensor 125 to identify the type of the generated input event, for example, a touch event and/or a drag event. Subsequently, the control unit 130 changes a form of the displayed sound source object according to the identified input event and controls an operation of the playing multimedia file.

If the generated input event is a touch event, the control unit 130 identifies whether a sound source object is selected. If a sound source object is selected, the control unit 130 changes a characteristic of the playing multimedia file corresponding to the selected sound source object. For this, the control unit 130 may change a frequency band output value of the corresponding sound source object. For example, if the selected sound source object is a sound source object of a classic tone, the control unit 130 may play the corresponding multimedia file in a classic tone by increasing an output of a low frequency (for example, 125 Hz). If the selected sound source object is a sound source object of a vocal tone, the control unit 130 may play a multimedia file by decreasing an output of a frequency band covering a human voice. Therefore, the user may hear only the melody portion of the multimedia file by eliminating the human voice.

In another exemplary implementation, if the generated input event is a drag event, the control unit 130 identifies the movement direction of the drag event by detecting starting and ending coordinates of the drag event. If the identified movement direction of the drag event is a vertical direction, the control unit 130 controls the touch sensor 125 to calculate a displacement value in the vertical direction between the starting and ending coordinates and controls a sound volume according to the calculated displacement value. As an example, if the movement direction of the drag event is a downward direction, the control unit 130 may reduce the sound volume, and if the movement direction of the drag event is an upward direction, the control unit 130 may increase the sound volume.

In yet another exemplary implementation, if the identified movement direction of the drag event is a horizontal direction, the control unit 130 controls the touch sensor 125 to calculate a displacement value in the horizontal direction between the starting and ending coordinates. Based on the calculated displacement value, the control unit 130 controls a play speed of the multimedia file. For example, if the movement direction of the drag event is a rightward direction, the control unit 130 reduces the play speed corresponding to the calculated displacement value. If the movement direction of the drag event is a leftward direction, the control unit 130 increases the play speed corresponding to the calculated displacement value.

Further, if the identified movement direction of the drag event is a diagonal direction, the control unit 130 controls the touch sensor 125 to calculate displacement values in the vertical direction and in the horizontal direction, and determines a coordinate having a greater displacement value as the movement direction of the drag event. The control unit 120 then controls the sound volume and play speed of the multimedia file according to the movement direction of the drag event.

Still further, the control unit 130 stores play control information in the storage unit 110 corresponding to the changed form of the sound source object. The control unit 130 controls an audio processing unit 140 to play a multimedia file corresponding to the changed form of the sound source object.

The audio processing unit 140 converts various audio signals generated by the control unit 130 to signals to be output to a speaker SPK. More particularly, the audio processing unit 140 plays a multimedia file according to the form of the sound source object changed by the control unit 130.

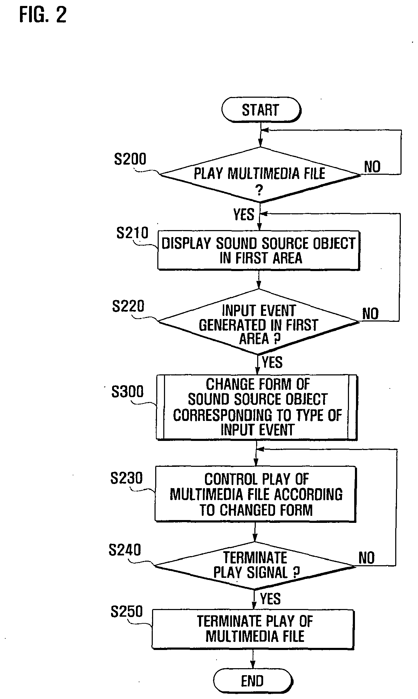

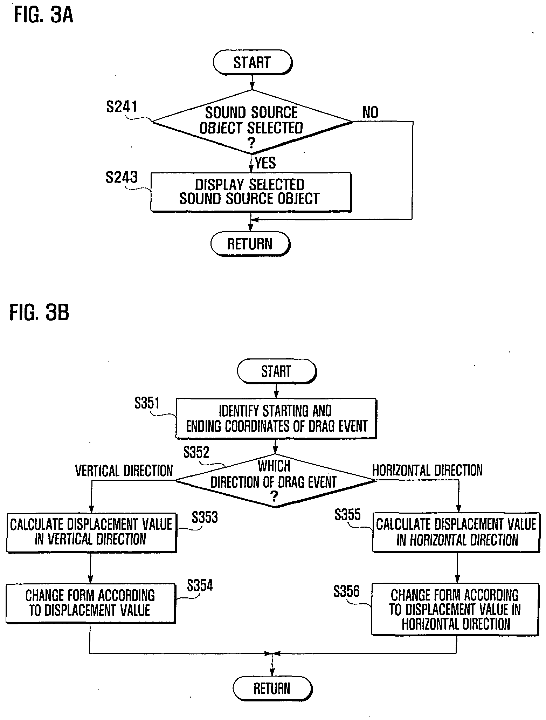

FIG. 2 is a flowchart illustrating a user interface method in a multimedia playing device according to an exemplary embodiment of the present invention. FIG. 3A is a flowchart illustrating a detailed process of changing a form of a sound source object corresponding to a touch event of FIG. 2. FIG. 3B is a flowchart illustrating a detailed process of changing a form of a sound source object corresponding to a drag event of FIG. 2.

Referring to FIGs. 1 and 2, the control unit 130 identifies whether a multimedia file is being played in step S200. If a multimedia file is being played, the control unit 130 controls to display at least one sound source object in a first area of the touch screen 120 in step S210. For example, the control unit 130 controls to display at least one sound source object in a wave form wherein each sound source object represents tone information. That is, the displayed wave of the sound source object may represent frequency band output, volume, play speed information and the like. As a further example, the height of a specific point of the wave may represent a frequency band output. If the maximum height of the wave is great, the corresponding frequency band output has a high value. If the maximum height of the wave is small, the corresponding frequency band output has a low value. Also, the amplitude of the wave may represent a sound volume. If the difference between the amplitude of the highest point of the wave and the amplitude of the lowest point of the wave is large, the sound volume has a high value. If the difference between the amplitude of the highest point of the wave and the amplitude of the lowest point of the wave is small, the sound volume has a low value. Furthermore, the frequency of the wave may represent a play speed. If the frequency of the wave is high, the play speed is high, and if the frequency of the wave is low, the play speed is low. In an exemplary embodiment, the first area is a center area of three equally divided areas of the touch screen arranged in the vertical direction.

Referring again to FIGs. 1 and 2, the control unit 130 controls the touch sensor 125 to identify whether an input event is generated in the first area in step S220. If an input event is generated in the first area, the control unit 130 changes the form of a sound source object corresponding to the type of the input event in step S300. In contrast, the control unit 130 may expand the first area if an input event is generated in the first area, and then change the form of a sound source object corresponding to a further input event. The sound source object displayed in the first area may be expanded by the same ratio as the ratio of expanding the first screen to display a full screen. However, the expansion ratio of the sound source object may vary according to a user setting. The process of changing the form of the sound source object of step S300 is described in greater detail referring to FIGs. 3A and 3B.

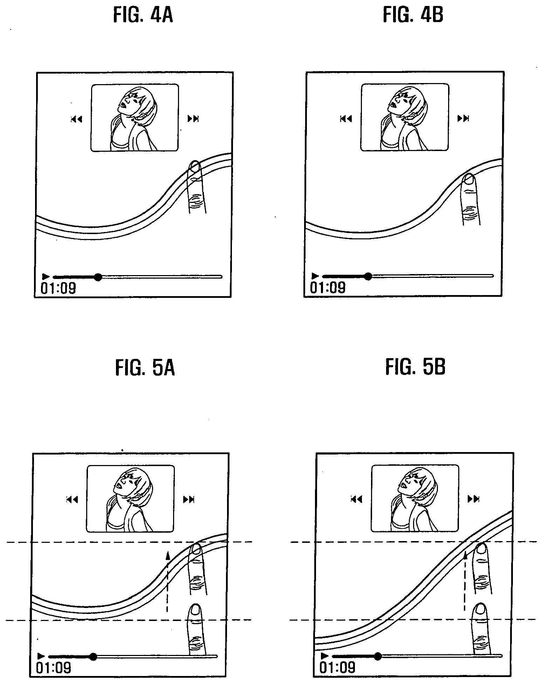

Referring to FIG. 3A, if the input event generated at step S220 is a touch event, the control unit 130 identifies whether a specific sound source object is selected in step S241. For example, the control unit 130 controls the display unit 121 to display at least one sound source object including first tone information (for example, classic, rock, and dance tones) in a wave form, as shown in FIG. 4A. Individual sound source objects including the first tone information are displayed close to each other but not overlapping each other and the waves indicating each sound source object are distinguished by the thickness of each wave line. The waves indicating the sound source objects may also be distinguished, for example, by the color and transparency of each wave line. The thickness, color and transparency of each wave line are preferably predetermined by the user. However, values for distinguishing the sound source objects may be changed according to the user's selection.

In another example, the control unit 130 controls the display unit 121 to display a sound source object including second tone information (for example, vocal and melody tones) in a wave form, as shown in FIG. 4B.

If a specific sound source object is selected, the control unit 130 controls the display unit 121 to display the selected sound source object differently from other sound source objects in step S243. For example, the selected sound source object and unselected sound source objects may be displayed in different colors, or different line thickness as shown in FIGS. 4A and 4B.

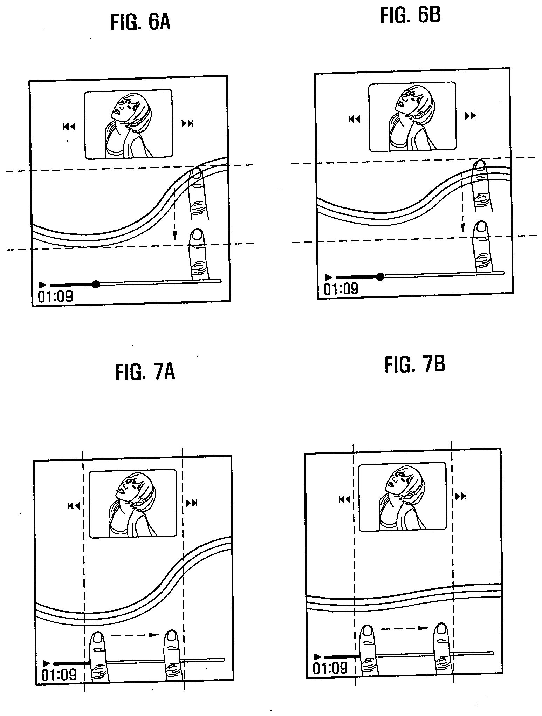

Referring to FIG. 3B, if the input event generated at step S220 is a drag event, the control unit 130 identifies starting and ending coordinates of a drag event in step S351. The control unit 130 determines the movement direction of the drag event by using the identified starting and ending coordinates in step S352. If a movement direction of the drag event is a vertical direction, the control unit 130 calculates a displacement value in the vertical direction between the starting and ending coordinates in step S353. Subsequently, the control unit 130 changes the form of a sound source object according to the calculated displacement value and the movement direction of the drag event in step S354. For example, if the movement direction of the drag event is an upward direction as shown in FIG. 5A, the control unit 130 controls the display unit 121 to display the amplitude of the sound source object in an increased size as shown in FIG. 5B. In another example, if the movement direction of the drag event is a downward direction as shown in FIG. 6A, the control unit 130 controls the display unit 121 to display the amplitude of the sound source object in a decreased size as shown in FIG. 6B.

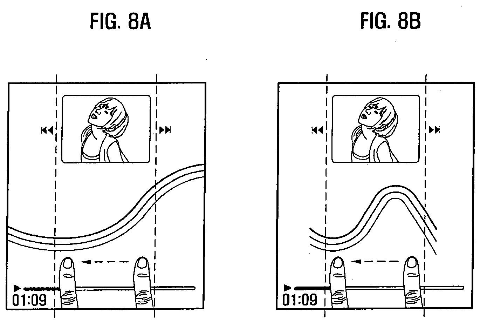

In contrast, if the movement direction of the drag event is a horizontal direction, the control unit 130 calculates a displacement value in the horizontal direction between the starting and ending coordinates in step S355. Subsequently, the control unit 130 changes the form of a sound source object according to the calculated displacement value and the movement direction of the drag event in step S356. For example, if the movement direction of the drag event is a rightward direction as shown in FIG. 7A, the control unit controls the display unit 121 to display the frequency of the sound source object in a decreased size as shown in FIG. 7B. In another example, if the movement direction of the drag event is a leftward direction as shown in FIG. 8A, the control unit controls the display unit 121 to display the frequency of the sound source object in an increased size as shown in FIG. 8B.

Returning to FIG. 2, the control unit 130 controls play of a multimedia file according to the changed form of the sound source object in step S230.

In an exemplary implementation, if a sound source object is selected, the control unit 130 identifies the selected sound source object, and changes a frequency band output value of the corresponding multimedia file. If the selected sound source object is a sound source object of a classic tone, the control unit 130 changes the tone of the multimedia file to a classic tone and plays the multimedia by increasing an output of a low frequency (for example, 125 Hz). If the selected sound source object is a sound source object of a vocal tone, the control unit 130 plays the multimedia file by decreasing an output of a frequency band covering a human voice. Therefore, the user may hear only the melody portion of the multimedia file by eliminating the human voice.

In another exemplary implementation, if the form of sound source object is changed, the control unit 130 plays a multimedia file corresponding to the changed form of the sound source object. For example, if the form of the sound source object shown in FIG. 5A is changed to the form of sound source object shown in FIG. 5B, the control unit 130 may increase the volume of the playing multimedia file according to the amplitude of the sound source object. In another example, if the form of the sound source object shown in FIG. 6A is changed to the form of the sound source object shown in FIG. 6B, the control unit 130 may reduce the volume of the playing multimedia file according to the amplitude of the sound source object.

In yet another example, if the form of the sound source object shown in FIG. 7A is changed to the form of the sound source object shown in FIG. 7B, the control unit 130 may reduce the speed of the playing multimedia file according to the displayed wave frequency of the sound source object. And if the form of the sound source object shown in FIG. 8A is changed to the form of the sound source object shown in FIG. 8B, the control unit 130 may increase the speed of the playing multimedia file according to the displayed wave frequency of the sound source object.

Returning to FIG. 2, the control unit 130 identifies whether a signal for terminating play of a multimedia file is input in step S240. If a signal for terminating play of a multimedia file is input, the control unit 130 terminates the play of the multimedia file in step S250.

In this exemplary embodiment, a method of displaying a sound source object in a wave form has been described. However, the sound source object may be displayed in various forms of lines and figures.

According to an exemplary embodiment of the present invention, a status of a playing multimedia file may easily be identified by displaying a sound source object in a wave form in a multimedia playing device, and a play operation of a multimedia file may easily be controlled according to touch and drag event input in a touch screen.

Although the present invention has been described with reference to certain exemplary embodiments in detail hereinabove, it should be understood by those skilled in the art that many variations in form and modifications of the basic inventive concept may be made therein without departing from the scope of the present invention as defined in the appended claims.

## Claims

1. A user interface method in a multimedia playing device (100) having a touch screen (120), the method comprising:
displaying (S210), while playing (S200) a multimedia file, at least one sound source object in a first area of the touch screen (120);
identifying (S220), if an input event is generated for the sound source object, a type of the input event;
changing (S300) a form of the displayed sound source object according to the type of the input event; and
controlling (S230) the playing of the multimedia file according to the changed form,
wherein the sound source object illustrates a characteristic of the playing multimedia file, **characterised in that** the sound source object is displayed in a wave form, and
changing a form of the displayed sound source object and controlling the playing of the multimedia file comprise changing the amplitude of the wave form and changing the volume of the playing multimedia file if the input event is a drag event including a vertical displacement, and changing the frequency of the wave form and changing the play speed of the playing multimedia file if the input event is a drag event including a horizontal displacement.

2. The user interface method of claim 1, wherein the sound source object comprises information of at least one of tone, volume, frequency band output and play speed.

3. The user interface method of claim 1, wherein the displaying (S210) of the at least one sound source object in the first area of the touch screen (120) comprises displaying a plurality of sound source objects.

4. The user interface method of claim 3, wherein the identifying (S220) of the type of the input event comprises:
expanding, if a first input event is generated in the first area, the first area; and
identifying, if a second input event is generated in the expanded first area, a type of the second input event.

5. The user interface method of claim 4, wherein the type of the first input event and the type of the second input event independently comprise at least one of a touch event and a drag event.

6. The user interface method of claim 5, further comprising:
determining, if the second input event is identified to be a touch event, whether a specific sound source object is selected for the second input event; and
changing, if a specific sound source object is selected for the second input event, at least one of the tone, volume, frequency band output and play speed of the playing multimedia file corresponding to the selected sound source object.

7. The user interface method of claim 5, wherein the controlling (S230) of the playing of the multimedia file comprises:
detecting (S351), if the second input event is a drag event, starting and ending coordinates of the drag event, and determining (S352) the movement direction of the second input event;
calculating (S353), if the movement direction of the second input event is a vertical direction, a displacement value in the vertical direction between the starting and ending coordinates; and
changing (S354) at least one of the tone, sound volume, frequency band output and play speed of the playing of the multimedia file according to the calculated displacement value and the movement direction of the second input event.

8. The user interface method of claim 7, wherein the controlling of the playing of the multimedia file comprises:
calculating (S355), if the movement direction of the second input event is a horizontal direction, a displacement value in the horizontal direction between the starting and ending coordinates; and
changing (S356) at least one of the tone, volume, frequency band output and play speed of the multimedia file according to the calculated displacement and the direction of the second input event.

9. The user interface method of claim 1, wherein the sound source object is identified by at least one of the thickness, color and transparency of a wave line.

10. The user interface method of claim 9, wherein the multimedia file comprises at least one of a video file and an audio file.

11. A device (100) for playing a multimedia file having a touch screen (120), the device (100) comprising:
a display unit (121) for displaying, while playing the multimedia file, at least one sound source object in a first area of the touch screen (120);
a control unit (130) for identifying, if an input event is generated for the sound source object, a type of the input event, for changing a form of the displayed sound source object according to the type of the input event, and for controlling the playing of the multimedia file according to the changed form,
wherein the sound source object illustrates a characteristic of the playing multimedia file, **characterised in that** the sound source object is displayed in a wave form, and
changing a form of the displayed sound source object and controlling the playing of the multimedia file comprise changing the amplitude of the wave form and changing the volume of the playing multimedia file if the input event is a drag event including a vertical displacement, and changing the frequency of the wave form and changing the play speed of the playing multimedia file if the input event is a drag event including a horizontal displacement.

12. The device of claim 11, wherein the sound source object comprises information of at least one of tone, volume, frequency band output and play speed.

13. The device of claim 11, wherein the type of the input event comprises at least one of a touch event and a drag event.

14. A mobile terminal comprising a device (100) according to any of claims 12 to 13.

## Patentansprüche

1. Benutzerschnittstellenverfahren für ein Multimedia-Spielgerät (100) mit einem Touchscreen (120), wobei das Verfahren umfasst:
Anzeigen (S210), während eine Multimedia-Datei gespielt (S200) wird, mindestens eines Schallquellenobjekts in einem ersten Bereich des Touchscreens (120);
Identifizieren (S220), wenn ein Eingabe-Event für das Klangquellenobjekt generiert wird, einer Art des Eingabe-Events;
Ändern (S300) einer Form des angezeigten Klangquellenobjekts gemäß der Art des Eingabeereignisses; und
Steuern (S230) des Spielens der Multimedia-Datei gemäß der geänderten Form,
wobei das Klangquellenobjekt eine Charakteristik der spielenden Multimedia-Datei veranschaulicht,
**dadurch gekennzeichnet, dass**
das Klangquellenobjekt in einer Wellenform angezeigt wird, und
Ändern einer Form des angezeigten Klangquellenobjekts und Steuern des Spielens der Multimedia-Datei umfassen das Ändern der Amplitude der Wellenform und Ändern des Volumens der spielenden Multimedia-Datei, wenn das Eingabe-Event ein Drag-Event ist, das eine vertikale Verschiebung einschließt, und Änderung der Frequenz der Wellenform und Änderung der Spielgeschwindigkeit der spielenden Multimedia-Datei, wenn das Eingabe-Event ein Drag-Event ist, das eine horizontale Verschiebung einschließt.

2. Benutzerschnittstellenverfahren nach Anspruch 1, wobei das Klangquellenobjekt Information von mindestens einem der Folgenden umfasst: Ton, Volumen, Frequenzbandleistung und Spielgeschwindigkeit.

3. Benutzerschnittstellenverfahren nach Anspruch 1, wobei das Anzeigen (S210) des mindestens einen Klangquellenobjekts im ersten Bereich des Touchscreens (120) das Anzeigen einer Vielzahl von Klangquellenobjekten umfasst.

4. Benutzerschnittstellenverfahren nach Anspruch 3, wobei das Identifizieren (S220) der Art des Eingabe-Events umfasst:
Expandieren, wenn ein erstes Eingabe-Event im ersten Bereich generiert wird, des ersten Bereichs; und
Identifizieren, wenn ein zweites Eingabe-Event im expandierten ersten Bereich generiert wird, einer Art des zweiten Eingabe-Events.

5. Benutzerschnittstellenverfahren nach Anspruch 4, wobei die Art des ersten Eingabe-Events und die Art des zweiten Eingabe-Events unabhängig mindestens einen von einem Touch-Event und von einem Drag-Event umfassen.

6. Benutzerschnittstellenverfahren nach Anspruch 5, ferner umfassend:
Ermitteln, wenn das zweite Eingabe-Event als ein Touch-Event identifiziert wird, ob ein spezifisches Klangquellenobjekt für das zweite Eingabe-Event selektiert wird; und
Ändern, wenn ein spezifisches Klangquellenobjekt für das zweite Eingabe-Event selektiert wird, mindestens eins der Folgenden: Ton, Volumen, Frequenzbandleistung und Spielgeschwindigkeit der spielenden Multimedia-Datei entsprechend des selektierten Klangquellenobjekts.

7. Benutzerschnittstellenverfahren nach Anspruch 5, wobei das Steuern (S230) des Spielens der Multimedia-Datei umfasst:
Detektieren (S351), wenn das zweite Eingabe-Event ein Drag-Event ist, der Koordinaten für Starten und Beenden des Drag-Events, und Ermitteln (S352) der Bewegungsrichtung des zweiten Eingabe-Events;
Berechnen (S353), wenn die Bewegungsrichtung des zweiten Eingabe-Events eine vertikale Richtung ist, eines Wertes der Verschiebung in der vertikalen Richtung zwischen den Koordinaten für Starten und Beenden; und
Ändern (S354) mindestens eins der Folgenden: Ton, Klangvolumen, Frequenzbandleistung und Spielgeschwindigkeit der spielenden Multimedia-Datei gemäß dem berechneten Wert der Verschiebung und der Bewegungsrichtung des zweiten Eingabe-Events.

8. Benutzerschnittstellenverfahren nach Anspruch 7, wobei das Steuern des Spielens der Multimedia-Datei umfasst:
Berechnen (S355), wenn die Bewegungsrichtung des zweiten Eingabe-Events eine horizontale Richtung ist, eines Wertes der Verschiebung in der horizontalen Richtung zwischen den Koordinaten für Starten und Beenden; und
Ändern (S356) mindestens eins der Folgenden: Ton, Volumen, Frequenzbandleistung und Spielgeschwindigkeit der spielenden Multimedia-Datei gemäß der berechneten Verschiebung und der Richtung des zweiten Eingabe-Events.

9. Benutzerschnittstellenverfahren nach Anspruch 1, wobei das Klangquellenobjekt durch mindestens eins der Folgenden identifiziert wird: Dicke, Farbe und Transparenz einer Wellenlinie.

10. Benutzerschnittstellenverfahren nach Anspruch 9, wobei die Multimedia-Datei mindestens eine einer Video-Datei und einer Audio-Datei umfasst.

11. Gerät (100) zum Spielen einer Multimedia-Datei mit einem Touchscreen (120), wobei das Gerät (100) umfasst:
Eine Anzeigeeinheit (121) zur Anzeige, während die Multimedia-Datei spielt, mindestens eines Klangquellenobjekts in einem ersten Bereich des Touchscreens (120);
eine Steuereinheit (130) zum Identifizieren, wenn ein Eingabe-Event für das Klangquellenobjekt generiert wird, einer Art des Eingabe-Events zur Änderung einer Form des angezeigten Klangquellenobjekts gemäß der Art des Eingabe-Events und zur Steuerung des Spielens der Multimedia-Datei gemäß der geänderten Form,
wobei das Klangquellenobjekt eine Charakteristik der spielenden Multimedia-Datei veranschaulicht,
**dadurch gekennzeichnet, dass**
das Klangquellenobjekt in einer Wellenform angezeigt wird, und
Ändern einer Form des angezeigten Klangquellenobjekts und Steuern des Spielens der Multimedia-Datei umfassen das Ändern der Amplitude der Wellenform und Ändern des Volumens der spielenden Multimedia-Datei, wenn das Eingabe-Event ein Drag-Event ist, das eine vertikale Verschiebung einschließt, und Änderung der Frequenz der Wellenform und Änderung der Spielgeschwindigkeit der spielenden Multimedia-Datei, wenn das Eingabe-Event ein Drag-Event ist, das eine horizontale Verschiebung einschließt.

12. Gerät nach Anspruch 11, wobei das Klangquellenobjekt Information von mindestens einem der Folgenden umfasst: Ton, Volumen, Frequenzbandleistung und Spielgeschwindigkeit.

13. Gerät nach Anspruch 11, wobei die Art des Eingabe-Events mindestens einen von einem Touch-Event und von einem Drag-Event umfasst.

14. Mobiles Endgerät, das ein Gerät (100) nach einem der Ansprüche 12 bis 13 umfasst.

## Revendications

1. Un procédé d'interface utilisateur dans un dispositif de lecture multimédia (100) possédant un écran tactile (120), le procédé comprenant :
l'affichage (S210), pendant la lecture (S200) d'un fichier multimédia, d'au moins un objet source sonore dans une première zone de l'écran tactile (120),
l'identification (S220), si un événement d'entrée est généré pour l'objet source sonore, d'un type de l'événement d'entrée,
la modification (S300) d'une forme de l'objet source sonore affiché en fonction du type de l'événement d'entrée, et
la commande (S230) de la lecture du fichier multimédia en fonction de la forme modifiée,
où l'objet source sonore illustre une caractéristique du fichier multimédia en cours de lecture,
**caractérisé en ce que**
l'objet source sonore est affiché dans une forme d'onde, et
la modification d'une forme de l'objet source sonore affiché et la commande de la lecture du fichier multimédia comprennent la modification de l'amplitude de la forme d'onde et la modification du volume du fichier multimédia en cours de lecture si l'événement d'entrée est un événement de glissement comprenant un déplacement vertical, et la modification de la fréquence de la forme d'onde et la modification de la vitesse de lecture du fichier multimédia en cours de lecture si l'événement d'entrée est un événement de glissement comprenant un déplacement horizontal.

2. Le procédé d'interface utilisateur selon la Revendication 1, où l'objet source sonore comprend des informations d'au moins un élément parmi ton, volume, sortie de bande de fréquences et vitesse de lecture.

3. Le procédé d'interface utilisateur selon la Revendication 1, où l'affichage (S210) du au moins un objet source sonore dans la première zone de l'écran tactile (120) comprend l'affichage d'une pluralité d'objets sources sonores.

4. Le procédé d'interface utilisateur selon la Revendication 3, où l'identification (S220) du type de l'événement d'entrée comprend :
l'expansion, si un premier événement d'entrée est généré dans la première zone, de la première zone, et
l'identification, si un deuxième événement d'entrée est généré dans la première zone étendue, d'un type du deuxième événement d'entrée.

5. Le procédé d'interface utilisateur selon la Revendication 4, où le type du premier événement d'entrée et le type du deuxième événement d'entrée comprennent indépendamment au moins un événement parmi un événement tactile et un événement de glissement.

6. Le procédé d'interface utilisateur selon la Revendication 5, comprenant en outre :
la détermination, si le deuxième événement d'entrée est identifié être un événement tactile, si un objet source sonore spécifique est sélectionné pour le deuxième événement d'entrée, et
la modification, si un objet source sonore spécifique est sélectionné pour le deuxième événement d'entrée, d'au moins un élément parmi le ton, le volume, la sortie de bande de fréquences et la vitesse de lecture du fichier multimédia en cours de lecture correspondant à l'objet source sonore sélectionné.

7. Le procédé d'interface utilisateur selon la Revendication 5, où la commande (S230) de la lecture du fichier multimédia comprend :
la détection (S351), si le deuxième événement d'entrée est un événement de glissement, de coordonnées de début et de fin de l'événement de glissement, et la détermination (S352) de la direction de déplacement du deuxième événement d'entrée,
le calcul (S353), si la direction de déplacement du deuxième événement d'entrée est une direction verticale, d'une valeur de déplacement dans la direction verticale entre les coordonnées de début et de fin, et
la modification (S354) d'au moins un élément parmi le ton, le volume sonore, la sortie de bande de fréquences et la vitesse de lecture de la lecture du fichier multimédia en fonction de la valeur de déplacement calculée et de la direction de déplacement du deuxième événement d'entrée.

8. Le procédé d'interface utilisateur selon la Revendication 7, où la commande de la lecture du fichier multimédia comprend :
le calcul (S355), si la direction de déplacement du deuxième événement d'entrée est une direction horizontale, d'une valeur de déplacement dans la direction horizontale entre les coordonnées de début et de fin, et
la modification (S356) d'au moins un élément parmi le ton, le volume, la sortie de bande de fréquences et la vitesse de lecture du fichier multimédia en fonction du déplacement calculé et de la direction du deuxième événement d'entrée.

9. Le procédé d'interface utilisateur selon la Revendication 1, où l'objet source sonore est identifié par au moins un élément parmi l'épaisseur, la couleur et la transparence d'une ligne d'onde.

10. Le procédé d'interface utilisateur selon la Revendication 9, où le fichier multimédia comprend au moins un fichier parmi un fichier vidéo et un fichier audio.

11. Un dispositif (100) de lecture d'un fichier multimédia possédant un écran tactile (120), le dispositif (100) comprenant :
une unité d'affichage (121) destinée à l'affichage, pendant la lecture du fichier multimédia, d'au moins un objet source sonore dans une première zone de l'écran tactile (120),
une unité de commande (130) destinée à l'identification, si un événement d'entrée est généré pour l'objet source sonore, d'un type de l'événement d'entrée, à la modification d'une forme de l'objet source sonore affiché en fonction du type de l'événement d'entrée et à la commande de la lecture du fichier multimédia en fonction de la forme modifiée,
où l'objet source sonore illustre une caractéristique du fichier multimédia en cours de lecture,
**caractérisé en ce que**
l'objet source sonore est affiché dans une forme d'onde, et
la modification d'une forme de l'objet source sonore affiché et la commande de la lecture du fichier multimédia comprennent la modification de l'amplitude de la forme d'onde et la modification du volume du fichier multimédia en cours de lecture si l'événement d'entrée est un événement de glissement comprenant un déplacement vertical, et la modification de la fréquence de la forme d'onde et la modification de la vitesse de lecture du fichier multimédia en cours de lecture si l'événement d'entrée est un événement de glissement comprenant un déplacement horizontal.

12. Le dispositif selon la Revendication 11, où l'objet source sonore comprend des informations d'au moins un élément parmi ton, volume, sortie de bande de fréquences et vitesse de lecture.

13. Le dispositif selon la Revendication 11, où le type de l'événement d'entrée comprend au moins un événement parmi un événement tactile et un événement de glissement.

14. Un terminal mobile comprenant un dispositif (100) selon l'une quelconque des Revendications 12 à 13.
